# EUROPEAN PATENT APPLICATION

(11) **EP 4 534 988 A1**
(43) Date of publication of application: **09.04.2025**
(21) Application number: 23815733.3
(22) Date of filing: 12.05.2023
(51) Int. Cl.: G01N 21/956, H05K 3/34

(54) **INSPECTION DEVICE**

(30) Priority: 31.05.2022 JP 2022088650
(71) Applicant: Saki Corporation, Tokyo 135-0051 (JP)
(72) Inventor: SHIONOYA, Mitsutoshi, Tokyo 135-0051 (JP); YAMAMOTO, Yosuke, Tokyo 135-0051 (JP); SHINODA, Hiroshi, Tokyo 135-0051 (JP)
(74) Representative: Plougmann Vingtoft a/s
(86) International application number: PCT/JP2023/017990
(87) International publication number: WO 2023/233973

(57) **Abstract**

To provide an inspection device capable of classifying a type of solder based on differences in a shape (texture) of a solidification structure that appears on a surface of solder that is an inspection object. An inspection device 10 includes an imaging unit 20 that captures an image of an inspection object 12 and a controlling unit 30, wherein the controlling unit 30 captures an image of a solder portion on the inspection object 12 with the imaging unit 20 and acquires image data, extracts a feature of a shape of a solidification structure that appears on a surface of the solder portion from the image data, and classifies a type of solder used in the solder portion based on the feature.

## Description

### Technical Field

The present invention relates to an inspection device.

### Background Art

In an inspection device that inspects an appearance of a substrate on which electronic components or the like being inspection objects are mounted, a state of soldering on the substrate is inspected (for example, refer to Patent Literature 1). In addition, in recent years, a large number of solders with low lead content have been developed. Therefore, solders with different performances have been developed due to different compositions (for example, refer to Patent Literature 2).

### Citation List

### Patent Literature

Patent Literature 1: Japanese Patent Laid-Open No. 2012-053015
Patent Literature 2: Japanese Patent Laid-Open No. 2019-206032

### Summary of Invention

### Technical Problem

While a large number of solders with low lead content have been developed in recent years as described above, a type of solder to be used is determined for each substrate from the perspective of quality assurance or the like. However, a different type of solder from that specified may be used due to a mistake or another reason. Current inspection devices have a problem in that, in such cases, the type of solder used on a substrate cannot be classified.

The present invention has been made in consideration of such problems and an object thereof is to provide an inspection device capable of classifying a type of solder based on differences in a shape (texture) of a solidification structure that appears on a surface of a solder that is on an inspection object.

### Solution to Problem

In order to solve the problem described above, an inspection device according to the present invention includes an image unit that captures an image of an inspection object and a control unit, wherein the control unit captures an image of a solder portion on the inspection object with the image unit and acquires image data, extracts a feature of a shape of a solidification structure that appears on a surface of the solder portion from the image data, and classifies a type of solder used in the solder portion based on the feature.

### Advantageous Effect of Invention

With the inspection device according to the present invention, a type of solder can be classified based on differences in a shape (texture) of a solidification structure that appears on a surface of a solder that is on an inspection object.

### Brief Description of Drawings

[Figure 1] Figure 1 is an explanatory diagram for describing a configuration of an inspection device.
[Figure 2] Figure 2 is an explanatory diagram for describing projection angles of an illuminating unit and a detection of reflected light of the illuminating unit, in which (a) shows a projection angle of each illuminating source of the illuminating unit and (b) shows an example of a state of an inspection surface of an inspection object.
[Figure 3] Figure 3 is an explanatory diagram for describing a correspondence between hue in an HSV color system and a projection angle of an illuminating source of the illuminating unit.
[Figure 4] Figure 4 is a flow chart showing a flow of image composition processing.
[Figure 5] Figure 5 is a flow chart showing a flow of solder type classification processing.
[Figure 6] Figure 6 is an explanatory diagram showing an example of a feature map.
[Figure 7] Figure 7 is a flow chart showing a flow of a first inspection method.
[Figure 8] Figure 8 is a flow chart showing a flow of a second inspection method.
[Figure 9] Figure 9 is a flow chart showing a flow of a third inspection method.
[Figure 10] Figure 10 is a flow chart showing a flow of a fourth inspection method.
[Figure 11] Figure 11 is a flow chart showing a flow of a fifth inspection method.

### Description of Embodiment

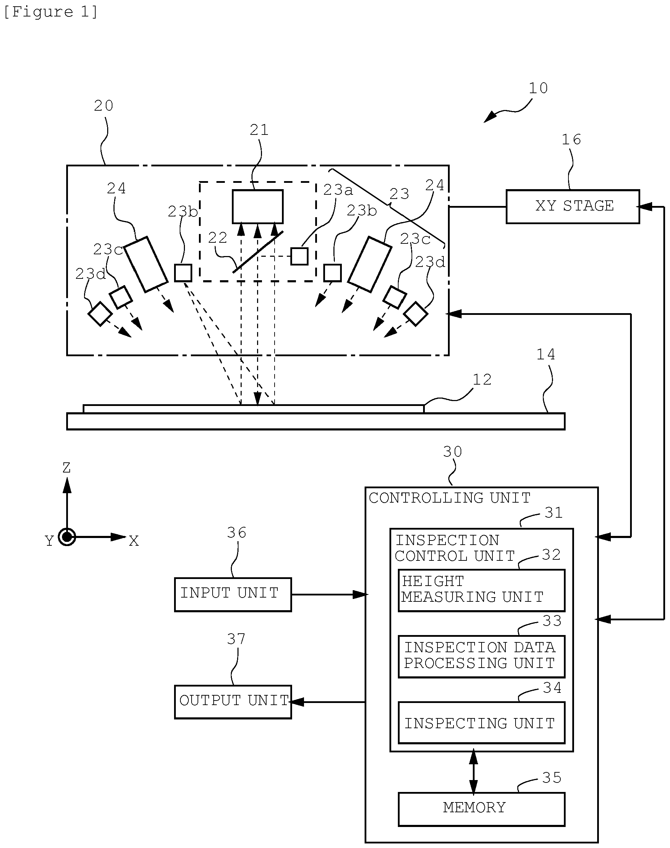

Hereinafter, a preferred embodiment of the present invention will be described with reference to the drawings. First, a configuration of an inspection device 10 according to the present embodiment will be described using Figure 1. The inspection device 10 is a device for inspecting an inspection object 12 using inspection object image data obtained by capturing an image of the inspection object 12. For example, the inspection object 12 is an electronic circuit board to which a large number of electronic components are mounted. The inspection device 10 specifies whether a mounting state of the electronic components is good or bad based on the inspection object image data. The inspection is usually performed on a plurality of inspection items for each component. An inspection item is an item that requires good/bad to be specified. For example, inspection items include inspection items with respect to component arrangement such as a stockout, a misalignment, a reversal of polarity, and the like of a component itself and inspection items with respect to a connection between the component and a substrate such as a soldering condition and lifting of a lead pin of the component.

The inspection device 10 is configured to include an inspection table 14 for holding the inspection object 12, an imaging unit 20 that illuminates and captures an image of the inspection object 12, an XY stage 16 that moves the imaging unit 20 with respect to the inspection table 14, and a controlling unit 30 for controlling the imaging unit 20 and the XY stage 16. For convenience of description, as shown in Figure 1, an inspection object arrangement surface of the inspection table 14 is considered an XY plane and a direction perpendicular to the arrangement surface (in other words, an imaging direction by the imaging unit 20 (an optical axis direction of an optical system of a camera unit 21)) is considered a Z direction.

The imaging unit 20 is attached to a mobile table (not illustrated) of the XY stage 16 and is movable in each of an X direction and a Y direction due to the XY stage 16. For example, the XY stage 16 is a so-called H-shaped XY stage. Therefore, the XY stage 16 is equipped with a Y linear motor that moves the mobile table in the Y direction along a Y-direction guide extending in the Y direction, and two X-direction guides and an X linear motor configured to support the Y-direction guide at both ends thereof and enable the mobile table and the Y-direction guide to move in the X direction. The XY stage 16 may be further equipped with a Z movement mechanism to move the imaging unit 20 in the Z direction or further equipped with a rotation mechanism to rotate the imaging unit 20. The inspection device 10 may be further equipped with an XY stage that enables the inspection table 14 to move, in which case the XY stage 16 that moves the imaging unit 20 may be omitted.

The imaging unit 20 is configured to include the camera unit 21, a one-way mirror 22, an illuminating unit 23, and a projection unit 24. In the inspection device 10 according to the present embodiment, the camera unit 21, the one-way mirror 22, the illuminating unit 23, and the projection unit 24 may be configured as an integrated imaging unit 20. In the integrated imaging unit 20, relative positions of the camera unit 21, the one-way mirror 22, the illuminating unit 23, and the projection unit 24 may be fixed or each unit may be configured so as to be relatively movable. Alternatively, the camera unit 21, the one-way mirror 22, the illuminating unit 23, and the projection unit 24 may be separated bodies and configured so as to be separately movable. While a case where the inspection object 12 is illuminated using the one-way mirror 22 will be described hereinafter, the one-way mirror 22 need not be provided.

The camera unit 21 includes an image sensor that generates two-dimensional image data of an object and an optical system (for example, a lens) for forming an image on the image sensor. For example, the camera unit 21 is a CCD camera. A maximum visual field of the camera unit 21 may be smaller than an inspection object placement area of the inspection table 14. In this case, the camera unit 21 captures an entire image of the inspection object 12 by dividing the image into a plurality of partial images. The controlling unit 30 controls the XY stage 16 so that the camera unit 21 is moved to a next imaging position each time the camera unit 21 captures a partial image and outputs partial image data. The controlling unit 30 generates entire image data of the inspection object 12 by compositing the pieces of partial image data.

The camera unit 21 may be equipped with an image sensor that generates a one-dimensional image instead of a two-dimensional image sensor. In this case, by scanning the inspection object 12 with the camera unit 21, an entire image of the inspection object 12 can be acquired.

The illuminating unit 23 is configured to project illumination light for imaging by the camera unit 21 to a surface of the inspection object 12. The illuminating unit 23 is equipped with one or a plurality of light sources that emit light of a wavelength or a wavelength range selected from a wavelength range detectable by the image sensor of the camera unit 21. The illumination light is not limited to visible light and ultraviolet light, X-rays, and the like may be used. When the light source is provided in plurality, each light source is configured to project light (for example, red, blue, and green) of a different wavelength to the surface of the inspection object 12 from a different projection angle.

In the inspection device 10 according to the present embodiment, the illuminating unit 23 is equipped with an epi-illuminating source 23a that projects illumination light perpendicularly to the inspection surface of the inspection object 12 (in other words, a surface (X-Y plane) facing the imaging unit 20) and lateral illuminating sources (in the present embodiment, constituted of an upper light source 23b, a middle light source 23c, and a lower light source 23d) that project illumination light from diagonal directions to the inspection surface of the inspection object 12. The one-way mirror 22 is arranged on an optical axis of the optical system of the camera unit 21 and a part of the illumination light emitted from the epi-illuminating source 23a is reflected by the one-way mirror 22, passes over the optical axis, and projected on the inspection object 12. A half-prism may be used in place of the one-way mirror 22. In addition, in the inspection device 10 according to the present embodiment, each of the lateral illuminating sources 23b, 23c, and 23d is a ring illuminating source and is configured to surround the optical axis of the camera unit 21 and obliquely project illumination light to the inspection surface of the inspection object 12. Each of the lateral illuminating sources 23b, 23c, and 23d may be configured by having a plurality of light sources arranged in an annular shape. Each of the upper light source 23b, the middle light source 23c, and the lower light source 23d that are lateral illuminating sources is configured to project illumination light at a different angle with respect to the inspection surface.

In addition, each of the upper light source 23b, the middle light source 23c, and the lower light source 23d that are lateral illuminating sources may be constituted of one ring illuminating source or may include a plurality of ring illuminating sources. For example, the epi-illuminating source 23a can be mounted on a side of the camera unit 21 and, of the lateral illuminating sources, the upper light source 23b can be configured as one ring illuminating unit and the middle and lower light sources 23c and 23d can be configured as one integrated ring illuminating unit. In the present embodiment, the epi-illuminating source 23a is a red illuminating source and, of the lateral illuminating sources, the upper light source 23b and the lower light source 23d are red illuminating sources and, of the lateral illuminating sources, the middle light source 23c is constituted of a green illuminating source, a blue illuminating source, and a red illuminating source.

In this manner, while a case where four types of light sources that irradiate the inspection object 12 with illumination light from different angles will be described in the present embodiment, the types (number) of light sources are not limited to four and only the epi-illuminating source 23a may be used, a combination of the epi-illuminating source 23a and any of the lateral illuminating sources 23b to 23d may be used, or only the lateral illuminating sources 23b to 23d or only some of the lateral illuminating sources 23b to 23d may be used. Alternatively, only one light source among the light sources 23a to 23d may be used, in which case a configuration to obtain a monochrome image with a monochromatic light source may be adopted.

In Figure 1, for reference, a light flux that is projected from the epi-illuminating source 23a, reflected by the inspection surface of the inspection object 12, and projected to the camera unit 21 is indicated by a dashed arrow. In this case, the light reflected by the inspection surface of the inspection object 12 is incident to the one-way mirror 22 and a part of the light passes through the one-way mirror 22 and is incident to the camera unit 21. In addition, projections from the lateral illuminating sources 23b, 23c, and 23d and the projection unit 24 are similarly indicated by dashed arrows and, as an example, light fluxes projected from the upper light source 23b, reflected by the inspection surface of the inspection object 12, and incident to the camera unit 21 are also indicated. In this case, while the surface of the inspection object 12 is illustrated as a flat surface for convenience of description, in reality, the surface has inclinations and heights depending on location, just like a general inspection object.

The projection unit 24 projects a pattern to the inspection surface of the inspection object 12. An image of the inspection object 12 on which the pattern has been projected is captured by the camera unit 21. While the projection unit 24 is provided between the upper light source 23b and the middle light source 23c in the illustrated example, the arrangement of the projection unit 24 is not limited thereto and, for example, the projection unit 24 may be provided outside the lower light source 23d.

The inspection device 10 creates a height map of the inspection surface of the inspection object 12 based on pattern image data of the inspection object 12 captured in a state where the pattern has been projected from the projection unit 24. The controlling unit 30 detects local discrepancies in a pattern image relative to the projected pattern and determines the height of a location based on the local discrepancy. In other words, a change in a captured pattern (the pattern projected to the inspection object 12 and captured by the camera unit 21) relative to the projected pattern (the pattern projected from the projection unit 24 to the inspection object 12) corresponds to a change in height on the inspection surface.

In this case, the projected pattern is preferably a one-dimensional stripe pattern with alternating light and dark lines that repeat periodically. The projection unit 24 is arranged so as to project a stripe pattern to the inspection surface of the inspection object 12 from a diagonal direction. A discontinuity in height on the inspection surface of the inspection object 12 is represented as a pattern shift in a stripe pattern image. Therefore, a height difference can be determined from an amount of shift of the pattern. In the inspection device 10 according to the present embodiment, the controlling unit 30 creates a height map by a PMP (Phase Measurement Profilometry) method which uses a stripe pattern whose brightness varies according to a sine curve. In the PMP method, the amount of shift of a stripe pattern corresponds to a phase difference of the sine curve.

The projection unit 24 is configured so as to include a pattern forming apparatus, a light source for illuminating the pattern forming apparatus, and an optical system for projecting a pattern to the inspection surface of the inspection object 12. For example, the pattern forming apparatus may be a variable patterning apparatus capable of dynamically generating a desired pattern such as a liquid crystal display or a fixed patterning apparatus in which a pattern is fixedly formed on a substrate such as a glass plate. When the pattern forming apparatus is a fixed patterning apparatus, a pattern projection position is preferably made variable by providing a moving mechanism to move the fixed patterning apparatus or by providing an adjustment mechanism in the optical system for pattern projection. In addition, the projection unit 24 may be configured to be capable of switching among a plurality of fixed patterning apparatuses with different patterns.

The projection unit 24 may be provided in plurality around the camera unit 21. The plurality of projection units 24 are arranged so as to project patterns to the inspection object 12 from respectively different projection directions. Accordingly, an area that becomes a shadow and to which a pattern is not projected due to a height difference on the inspection surface can be reduced.

The controlling unit 30 shown in Figure 1 comprehensively controls the entire present apparatus, and while the controlling unit 30 can be implemented by a CPU, memory, or other LSI of any computer as hardware or by a program loaded onto a memory as software, functional blocks that are realized by cooperation between such hardware and software are depicted here. Therefore, it is understood by those skilled in the art that the functional blocks can be realized in various ways by hardware alone, software alone, or a combination thereof.

Figure 1 shows an example of a configuration of the controlling unit 30. The controlling unit 30 is configured to include an inspection control unit 31 and a memory 35 that is a storage unit. The inspection control unit 31 is configured to include a height measuring unit 32, an inspection data processing unit 33, and an inspecting unit 34. In addition, the inspection device 10 is equipped with an input unit 36 for receiving input from a user or another apparatus and an output unit 37 for outputting information related to an inspection, in which case the input unit 36 and the output unit 37 are respectively connected to the controlling unit 30. For example, the input unit 36 includes input means such as a mouse and a keyboard for receiving input from the user and communicating means for communicating with another apparatus. The output unit 37 includes known output means such as a display or a printer.

The inspection control unit 31 is configured to execute various kinds of control processing for inspection based on input from the input unit 36 and inspection-related information stored in the memory 35. The inspection-related information includes two-dimensional image data of the inspection object 12, a height map of the inspection object 12, and substrate inspection data (inspection data). Prior to an inspection, the inspection data processing unit 33 creates substrate inspection data using two-dimensional image data and a height map of an inspection object 12 that is guaranteed to pass all inspection items. The inspecting unit 34 executes the inspection based on created substrate inspection data and two-dimensional image data and a height map of the inspection object 12 to be inspected.

Substrate inspection data is inspection data that is created for each substrate variety. The substrate inspection data is, so to speak, a collection of inspection data for each component mounted on the substrate. The inspection data of each component includes inspection items required for that component, an inspection window that is an inspection area on an image for each inspection item, and inspection criteria for specifying whether each inspection item is good or bad. One or a plurality of inspection windows are set with respect to each inspection item. For example, in an inspection item of specifying whether soldering of a component is good or bad, usually, the same number of inspection windows as the number of soldering areas of the component are set in an arrangement corresponding to the arrangement of soldering areas. In addition, with respect to an inspection item that uses image data obtained by subjecting inspection object image data to predetermined image processing, contents of the image processing is also included in the inspection data.

The inspection data processing unit 33 sets each item of inspection data according to the substrate as substrate inspection data creation processing. For example, the inspection data processing unit 33 automatically sets a position and a size of each inspection window for each inspection item so as to conform to a component layout of the substrate. The inspection data processing unit 33 may receive input by the user with respect to a part of the items in inspection data. For example, the inspection data processing unit 33 may accept tuning of inspection criteria by the user. The inspection criteria may be set using height information.

The inspection control unit 31 executes imaging processing of the inspection object 12 as preprocessing of creation of substrate inspection data. As the inspection object 12, an inspection object having passed all inspection items is used. As described above, imaging processing is performed by controlling relative movement of the imaging unit 20 and the inspection table 14 while illuminating the inspection object 12 with the illuminating unit 23 and sequentially capturing partial images of the inspection object 12 to acquire partial image data. A plurality of pieces of partial image data are captured so as to cover the entire inspection object 12. The inspection control unit 31 composites the plurality of pieces of partial image data and generates full substrate image data including the entire inspection surface of the inspection object 12. The inspection control unit 31 stores the full substrate image data in the memory 35.

In addition, as preprocessing for creating a height map, the inspection control unit 31 controls relative movement of the imaging unit 20 and the inspection table 14 while projecting a pattern to the inspection object 12 with the projection unit 24 and sequentially capturing pattern images of the inspection object 12 in a divided manner to acquire pieces of divided image data when the pattern is projected. Preferably, the projected pattern is a stripe pattern whose brightness changes according to a sine curve based on the PMP method. The inspection control unit 31 composites the pieces of divided image data obtained by imaging and generates pattern image data that is image data of the entire inspection surface of the inspection object 12. The inspection control unit 31 stores the pattern image data in the memory 35. Alternatively, pattern image data may be generated with respect to a part of the inspection surface instead of the entire inspection surface.

The height measuring unit 32 creates a height map of the entire inspection surface of the inspection object 12 based on a captured pattern of the pattern image data. First, the height measuring unit 32 obtains a phase difference map of the inspection surface of the inspection object 12 by obtaining a local phase difference between the pattern image data and reference pattern image data for the entire image. The reference pattern image data is a pattern image projected by the projection unit 24 (in other words, image data generated by the pattern forming apparatus built into the projection unit 24). The height measuring unit 32 creates a height map of the inspection object 12 based on a reference plane to be a reference for height measurement and the phase difference map. For example, the reference plane is a substrate surface of the electronic circuit board to be inspected. The reference plane need not necessarily be a flat surface and may be a curved surface on which a deformation such as warpage of the substrate is reflected. The reference plane may be designated in advance by an input by the user or the like or, for example, obtained for each substrate by a substrate surface height measurement method to be described later.

Specifically, the height measuring unit 32 obtains a phase difference of a stripe pattern from each pixel of captured pattern image data and a pixel of reference pattern image data corresponding to the pixel. The height measuring unit 32 converts the phase difference into a height. The conversion to height is done using a local stripe width in the vicinity of the pixel in question. This is done to interpolate the stripe width on the captured pattern image data, which varies from one place to another. This is because, due to a distance from the projection unit 24 varying depending on a position on the inspection surface, the stripe width changes linearly from one end to the other end of a pattern projection area on the inspection surface even if the stripe width of the reference pattern is constant. The height measuring unit 32 determines a height from the reference plane based on the converted height and the reference plane and creates a height map of the inspection object 12.

The inspection control unit 31 may create inspection object image data having a height distribution by associating height information included in the height map of the inspection object 12 with each pixel of a two-dimensional image of the inspection object 12. In addition, the inspection control unit 31 may perform three-dimensional modeling display of the inspection object 12 based on the inspection object image data with a height distribution. Furthermore, the inspection control unit 31 may superimpose the height distribution on two-dimensional inspection object image data and display the resulting image data on the output unit 37. For example, the inspection object image data may be color-coded and displayed according to the height distribution. In the inspection device 10 according to the present embodiment, the projection unit 24 and the height measurement processing of the inspection object 12 by the projection unit 24 need not be implemented.

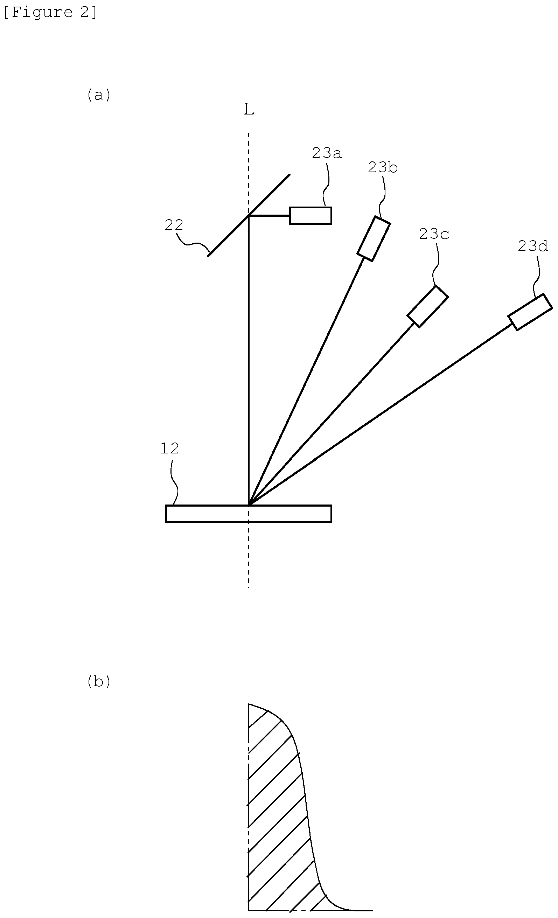

A processing method of image data captured using the illuminating unit 23 will now be described. As described above, in the inspection device 10 according to the present embodiment, the light sources (the epi-illuminating source 23a, and the upper light source 23b, the middle light source 23c, and the lower light source 23d that are lateral illuminating sources) that constitute the illuminating unit 23 are arranged so as to have different projection angles with respect to a reference plane of the inspection object 12 (this is the inspection surface of the inspection object 12, approximately parallel to an installation surface of the inspection device 10) as shown in Figure 2(a). Specifically, illumination light from the epi-illuminating source 23a is projected along an optical axis L of the optical system of the camera unit 21 or, in other words, approximately perpendicular to the reference plane, and illumination light is projected so that the projection angles approach a horizontal direction in an order of the upper light source 23b, the middle light source 23c, and the lower light source 23d.

Of the light projected from each of the light sources 23a to 23d of the illuminating unit 23 and reflected by the inspection object 12, light other than the light reflected by the inspection object 12 and directly incident to the camera unit 21 has an intensity of ideally zero. In other words, an angle (inclined state) of the inspection surface of the inspection object 12 with respect to the reference plane and the intensity of reflected light by a light source that projects light to be reflected by the inspection surface and directly incident to the camera unit 21 among the respective light sources 23a to 23d of the illuminating unit 23 increase while intensity of reflected light by the other light sources becomes zero. For example, when solder with a cross section shown in Figure 2(b) is formed on the inspection surface of the inspection object 12, the intensity of reflected light of the illumination light by each of the light sources 23a to 23d of the illuminating unit 23 as detected by the image sensor of the camera unit 21 changes according to an angle of a surface of the solder with respect to the reference plane. In the present embodiment, an inclined surface of 0° to 15° with respect to the reference plane is configured to increase the intensity of reflected light of light from the epi-illuminating source 23a, an inclined surface of 15° to 45° is configured to increase the intensity of reflected light of light from the upper light source 23b, an inclined surface of 45° to 65° is configured to increase the intensity of reflected light of light from the middle light source 23c, and an inclined surface of 65° to 85° is configured to increase the intensity of reflected light of light from the lower light source 23d. Note that the relationship between each of the light sources 23a to 23d of the illuminating unit 23 and an angle of an inclined surface of the inspection object 12 is simply an example and is not limited to this configuration.

From the above, the intensity of each pixel in image data obtained by turning on each of the light sources 23a to 23d of the illuminating unit 23 and capturing images with the camera unit 21 becomes larger when the angle of the inclined surface is consistent with the angle described above but has a value close to zero when it is not.

In consideration thereof, the inspection device 10 according to the present embodiment is configured to generate images of R (red), G (green), and B (blue) components from image data obtained by projecting illumination light from each of the light sources 23a to 23d of the illuminating unit 23 and capturing images with the camera unit 21, and further, to generate an RGB image (color image) by compositing the three images and express the state of inclination of the inspection surface of the inspection object 12.

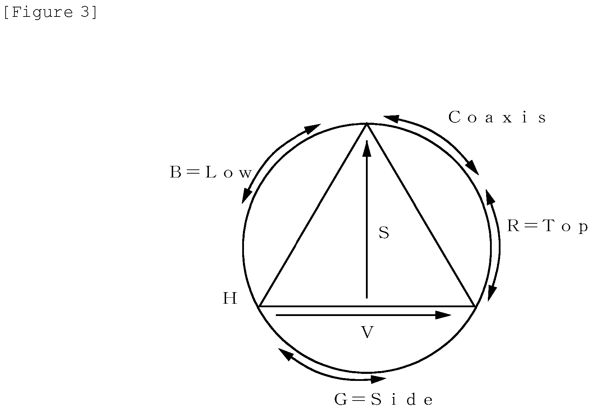

As shown in Figure 3, when colors are expressed in terms of hue H, saturation S, and value V (expressed by the HSV color system), hue H is represented in terms of the angle of a circle, and saturation S and value V are represented in terms of magnitudes in directions perpendicular to each other. In addition, in the hue H, R (red), G (green), and B (blue) are each positioned 120° apart. Therefore, by assigning image data obtained by reflected light of light projected from the upper light source 23b or, in other words, the image data obtained by detecting reflected light from the inclined surface of 15° to 45° (referred to as "Top" in Figure 3) in the present embodiment to R (red), assigning image data obtained by reflected light of light projected from the middle light source 23c or, in other words, the image data obtained by detecting the reflected light from the inclined surface of 45° to 65° (referred to as "Side" in Figure 3) to G (green), and assigning image data obtained by reflected light of light projected from the lower light source 23d or, in other words, the image data obtained by detecting the reflected light from the inspection surface of 65° to 85° (referred to as "Low" in Figure 3) to B (blue), since RGB image data (color image data) obtained by compositing these pieces of image data can provide image data expressed in RGB according to an inclined state, the inclined state of the inspection surface of the inspection object 12 can be ascertained from the color of the obtained image data. In addition, as described above, by associating the projection angle of the lateral illuminating sources 23b to 23d of the illuminating unit 23 to the hue H, since image data obtained by detecting reflected light from the inclined surface of 0° to 15° that is smaller than 15° to 45° expressed in R (red) (referred to as "Coaxis" in Figure 3) can be displayed in a color (purple) between R (red) and B (blue), even when four or more light sources with different projection angles are used as the illuminating unit 23, the inclined state of the inspection surface of the inspection object 12 can be clearly expressed by the RGB image data (color image data). In other words, the state of the solder shown in Figure 2(b) can be determined from an RGB image (color image).

Since there need not be matching between the color of the illumination light emitted from each of the light sources 23a to 23d of the illuminating unit 23 and the color (RGB) to which the image data obtained by capturing the reflected light of light emitted from each of the light sources 23a to 23d is assigned (since hue H represents the inclined state (angle) of the inspection surface of the inspection object 12), the image sensor of the camera unit 21 need not accommodate color (the image sensor need only be capable of detecting intensity of light). In the generation of RGB image data (color image data), a difference in intensity is expressed in terms of saturation S or value V.

The light sources 23a to 23d may be turned on sequentially in order to capture images of the inspection object 12 with the camera unit 21, or the camera unit 21 may be constituted of a camera capable of acquiring color image data and the light sources 23a to 23d may be turned on simultaneously to capture images of the inspection object 12 at one time. In this case, image data of the R (red) component, image data of the G (green) component, and image data of the B (blue) component can be acquired from one piece of color image data.

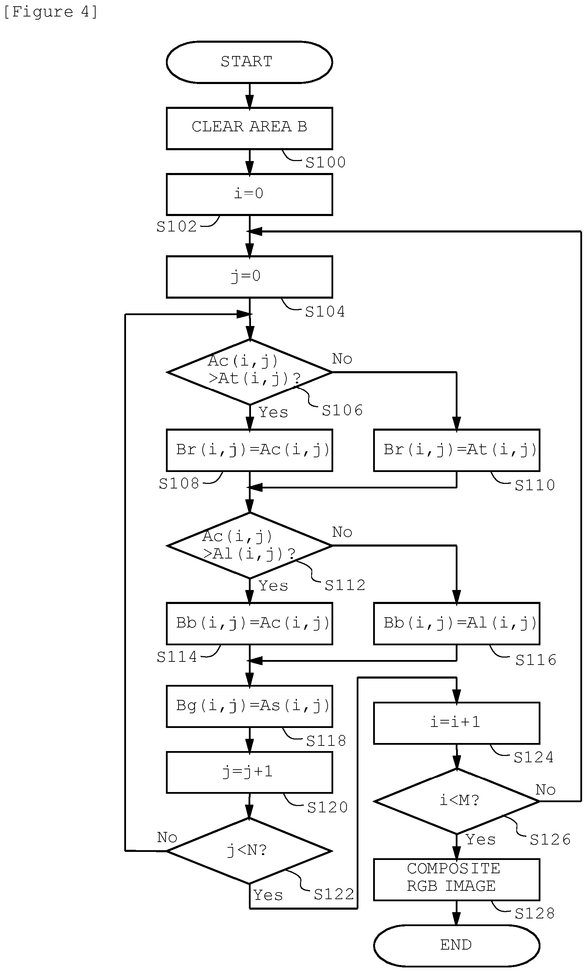

Image composition processing by the inspection control unit 31 of the controlling unit 30 will now be described using Figure 4. As described above, it is assumed that the XY stage 16 is controlled by the inspection control unit 31, image data of the inspection surface of the inspection object 12 when illuminated by the epi-illuminating source 23a (hereinafter referred to as a "Coaxis image"), image data when illuminated by the upper light source 23b (hereinafter referred to as a "Top image"), image data when illuminated by the middle light source 23c (hereinafter referred to as a "Side image"), and image data when illuminated by the lower light source 23d (hereinafter referred to as a "Low image") are obtained, and the intensity of each pixel is stored in the memory 35. In the following description, it is assumed that the image data obtained by capturing the inspection surface of the inspection object 12 (inspection object image data) is constituted of M × N pixels (where M and N are positive integers), and with respect to a pixel (i, j), a storage area of the image data of the epi-illuminating source 23a (Coaxis image) is denoted by Ac (i, j), a storage area of the image data of the upper light source 23b (Top image) is denoted by At (i, j), the storage area of the image data of the medium light source 23c (Side image) is denoted by As (i, j), and the storage area of the image data of the lower light source 23d (Low image) is denoted by Al (i, j). In addition, a storage area of the image data of the R (red) component generated by the following processing is denoted by Br (i, j), a storage area of the image data of the G (green) component generated by the following processing is denoted by Bg **(i, j),** and a storage area of the image data of the B (blue) component generated by the following processing is denoted by Bb **(i, j),** where i = 0 ... M-1, j = 0 ... N-1.

When image data of the inspection surface of the inspection object 12 due to each of the light sources 23a to 23d of the illuminating unit 23 is captured by the processing described above, the inspection control unit 31 of the controlling unit 30 clears the image data storage areas Br (i, j), Bg (i, j), and Bb (i, j) of image data of the RGB components (step S100). In addition, the inspection control unit 31 sets 0 to a variable i that counts a column direction of pixels in the image data (step S102), sets 0 to a variable j that counts a row direction of pixels in the image data (step S104), first compares an intensity (Ac (i, j)) of the Coaxis image with an intensity (At (i, j)) of the Top image at the pixel (i, j) (step S106), when the intensity of the Coaxis image is higher than that of the Top image, stores a value of the intensity of the Coaxis image as a value of the pixel (i, j) in the image data of the R component (sets a value of Ac (i, j) to Br (i, j)) (step S108), but when the intensity of the Top image is equal to or lower than the intensity of the Coaxis image, stores a value of the intensity of the Top image as a value of the pixel (i, j) in the image data of the R component (sets a value of At (i, j) to Br (i, j)) (step S110).

Next, the inspection control unit 31 compares the intensity (Ac(i, j)) of the Coaxis image with an intensity (Al(i, j)) of the Low image at the pixel (i, j) (step S112), when the intensity of the Coaxis image is higher than that of the Low image, stores the value of the intensity of the Coaxis image as a value of the pixel (i, j) in the image data of the B component (sets a value of Ac (i, j) to Bb (i, j)) (step S114), but when the intensity of the Low image is equal to or lower than the intensity of the Coaxis image, stores a value of the intensity of the Low image as a value of the pixel (i, j) in the image data of the B component (sets a value of Al (i, j) to Bb (i, j)) (step S116).

Furthermore, the inspection control unit 31 stores an intensity (As (i, j)) of the Side image at the pixel (i, j) as a value of the pixel (i, j) in the image data of the G component (sets a value of As (i, j) to Bg (i, j)) (step S118).

The inspection control unit 31 adds 1 to the variable j (step S120), determines whether or not the value of the variable j is smaller than N (step S122), and when smaller than **N,** returns to step S106 and repeats the processing steps described above. Alternatively, when the inspection control unit 31 determines in step S122 that the value of the variable j is equal to or larger than N, the inspection control unit 31 adds 1 to the variable i (step S124), determines whether or not the value of the variable i is smaller than M (step S126), and when smaller than M, returns to step S104 and repeats the processing steps described above.

Finally, using the image data Br (i, j) of the R component, the image data Bb (i, j) of the B component, and the image data Bg (i, j) of the G component ( i = 0 ... M-1, j = 0 ... N-1) generated with respect to all M × N pixels as described above, the inspection control unit 31 determines, for each pixel (i, j), a value of the red component from the value of Br (i, j), a value of the blue component from the value of Bb (i, j), and a value of the green component from Bg (i, j), composites color image data (RGB image data), and causes the memory 35 to store the composited color image data (RGB image data) (step S128).

Basically, although the intensity of reflected light cannot be detected unless the projection angle of each of the light sources 23a to 23d of the illuminating unit 23 and the inclined state of the inspection surface of the inspection object 12 are directly inputted to the camera unit 21, there may be cases where light reflected on the inspection surface and subsequently reflected elsewhere on the inspection surface of the inspection object 12 (due to secondary reflection) is incident to the camera unit 21 and is detected. In addition, as described using Figure 3, in the present embodiment, in the hue H of the finally generated RGB image data, R (red) is assigned to Top (representing an inclination of 15° to 45°) and B (blue) is assigned to Low (representing an inclination of 65° to 85°). Therefore, in the pixel (i, j), when the intensity (Ac (i, j)) of the Coaxis image is higher than the intensity (At (i, j)) of the Top image and the intensity (Al (i, j)) of the Low image, by setting the intensity of the Coaxis image as values (Br (i, j) and Bb (i, j)) of R image data and B image data at the pixel (i, j), the light can be determined to be at an angle (an inclined state of 0° to 15°) at which reflected light from the epi-illuminating source 23a is incident to the camera unit 21 and the hue H can be expressed by purple. In addition, when the intensity of the Top image is equal to or higher than the intensity of the Coaxis image, the inspection surface corresponding to the pixel can be determined to be at an angle (an inclined state of 15° to 45°) at which reflected light from the upper light source 23b is directly incident to the camera unit 21 and the hue H can be expressed by red, and when the intensity of the Low image is equal to or higher than the intensity of the Coaxis image, the inspection surface corresponding to the pixel can be determined to be at an angle (an inclined state of 65° to 85°) at which reflected light from the lower light source 23d is directly incident to the camera unit 21 and the hue H can be expressed by blue.

When the hue H of Coaxis is assigned to, for example, yellow, inclined states can no longer be discerned since the hue H is also yellow when the angle of the inspection surface is in an inclined state near a boundary between the inclined state (45° to 65°) corresponding to Side and the inclined state (65° to 85°) corresponding to Low, but by setting the hue H corresponding to Coaxis to purple between R (red) and B (blue) with a largest separation of ranges of inclination angles, inclined states can be clearly discerned. In a similar manner, adopting purple also enables effects due to secondary reflection to be eliminated.

As described above, by expressing the inclined state (angle) of the inspection surface of the inspection object 12 as RGB image data corresponding to the angle of hue H in the HSV color system (refer to Figure 3), since a change in the angle of hue H (in other words, a change in color) is to correspond to a change in the angle of the inspection surface (for example, when the angle of the inspection surface changes from 0° to 30° to 55° to 75°, the color of a pixel at a corresponding location in the RGB image changes from purple to red to green to blue), the inclined state of the inspection surface can be intuitively understood. While a case where states of Top, Side, and Low are respectively assigned to R (red), G (green), and B (blue) (resulting in a state of Coaxis being purple) has been described above, for example, a case where the state of Top is assigned to yellow can be accommodated by assigning colors whose hues H are shifted by 120° each from yellow to the states of Side and Low and by setting the state of Coaxis to the hue H between the states of Top and Low as shown in Figure 3.

In addition, when the inclined state of the inspection surface of the inspection object 12 changes smoothly by using the RGB image data as described above, since the inclined state changes according to the angle of the hue H as described above, the possibility of the inspection surface being abnormal (the height of the inspection surface being abnormal) can be expressed when the change of the hue H is not continuous or when the hue H changes abruptly. Furthermore, an estimation of the inclined state (angle) of the inspection surface from a change of the hue H in RGB image data can also be handed as a material for measuring the height of the inspection surface.

An inspection object due to such RGB image data is not limited to the solder surface described above and can also be applied to a shape of an IC lead tip or a shape of a chip electrode.

Next, when the inspection object 12 is an electronic circuit board or the like, types and a classification method of solders for attaching electronic components to the electronic circuit board will be described.

Conventional solder is an alloy consisting mainly of lead and tin, and when solder is heated and melted solder solidifies, a fine lamellar eutectic structure of lead and tin is formed, resulting in a smooth surface with smaller irregularities. On the other hand, in a case of so-called "lead-free solder" in which silver, copper, or other metals is blended in place of lead in order to reduce the lead content, primary crystals of coarse dendritic crystals (dendrites) first appear during solidification, and eutectic structures are formed in gaps between the primary crystals. Therefore, while a large number of irregularities in the order of several ten µm are formed on a surface of the solidified solder, shapes, size, and the number of the irregularities vary depending on the metals in the solder and their proportions. From the above, a type of solder used can be classified based on whether a shape of the solidification structure that appears on a surface of the solder (a shape (texture) of the solidified solder surface) is smooth or rough and, if rough, a shape, a size, and the number of irregularities.

The inspection device according to the present embodiment is configured such that, as described above, since RGB image data (color image data) that expresses an angle of the inspection surface in terms of differences in color information can be acquired by irradiating the surface of the inspection object 12 with illumination light emitted from different angles, a type of solder used can be classified from image data of a surface of the solder obtained using the RGB image data. Hereinafter, a classification method of a type of solder will be described.

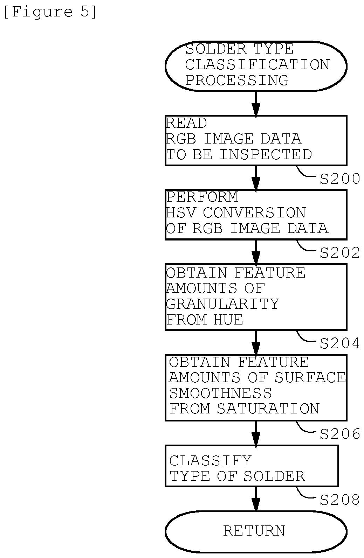

First, a method of classifying a type of solder will be described using Figure 5. When solder type classification processing is started, the controlling unit 30 reads RGB image data including a portion of solder from the memory 35 (step S200). As described above, substrate inspection data contains information on an inspection window being an inspection area on an image for each inspection item and a position of a portion of solder on the inspection object 12 can be specified from the information. Alternatively, the position of the solder can also be specified from design data of the inspection object 12. In addition, the controlling unit 30 performs HSV conversion of the read RGB image data and acquires three axis values of H (hue), S (saturation), and V (value) (step S202).

As described above, the information on hue represents an amount of inclination of the solder portion and reflects a macroscopic irregular surface shape of the solder portion. Therefore, the controlling unit 30 obtains features of granularity (size, shape, number, and the like of irregularities (particles)) by labeling a hue distribution by the three axis values obtained from RGB image data (step S204). In addition, the information on saturation is a continuous quantity that corresponds to diffuse reflectivity of the surface of the solder portion and reflects microscopic surface roughness and smoothness of the solder portion. Specifically, the saturation is close to zero when there is a lot of diffuse reflection while the saturation is 100% and reflects microscopic surface roughness and smoothness when there is a lot of total reflection and specular reflection. Therefore, the controlling unit 30 obtains a feature (smooth or rough) of surface smoothness from saturation due to the three axis values obtained from RGB image data (step S206).

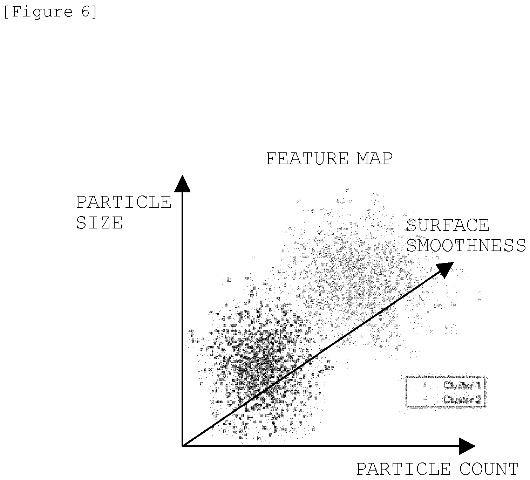

Finally, the controlling unit 30 compares the features obtained in steps S204 and S206 with, for example, a feature map shown in Figure 6, classifies a type of solder (step S208), and ends the solder type classification processing. Figure 6 shows a case where a type of solder is classified based on a particle count, a particle size and surface smoothness as features.

As the classification method of a type of solder, contour matching that is an algorithm for inspecting a specific area in an image can be used. The contour matching is a method of enclosing contours of consecutive pixels (areas) that match a condition and inspecting the areas by measuring the number, area value, and contour length of the contours. When an area value of irregularities is obtained by binarizing an image, a similar value is obtained regardless of whether object pixels are dispersed or clumped together, whereas since contour matching enables an area that is a clump of pixels to be captured, a shape (texture) of the solder surface can be accurately expressed. As described above, since the solder type classification processing according to the present embodiment uses RGB image data subjected to HSV conversion, accuracy of the features described above can be improved. Note that solders can also be classified based on original RGB image data not subjected to HSV conversion.

When irregularities of the solidification structure are finer than a resolution of the camera unit 21 and resemble a satin-like state, diffuse reflected light is to be captured. In this case, RGB values according to the angle of illumination are not clearly separated as in specular reflection and an image that appears as though each illumination is blended together is captured. In this case, while it becomes difficult to extract granulated contours themselves, a feature characteristic of a presence of irregularities that are finer than the resolution of the camera unit 21 can be obtained.

Alternatively, as the classification method of a type of solder, class classification can be performed by machine learning such as deep learning. Specifically, creating an AI model by learning HSV-converted RGB image data for each type of solder in an image area selected in advance enables the type of solder to be classified from the image data (image data obtained by subjecting RGB image data to HSV conversion) of a portion of solder based on the AI model during inspection. Using the AI model eliminates the need to perform parameter adjustment and the like for classification processing. Note that classification can also be performed based on original RGB image data not subjected to HSV conversion.

The classification of the type of solder used in the inspection object 12 may be determined not only based on a single solder part but also by performing the classification processing described above with respect to a plurality of solder portions of the inspection object 12 and classifying a type of solder that is classified most frequently as the type of solder used in the inspection object 12.

When acquiring HSV-converted RGB image data (specifically, image data whose color corresponds to an angle of a solder portion) from image data obtained by irradiating the inspection object 12 with illumination light from different angles, in terms of classifying a type of solder, the camera unit 21 is desirably arranged in a state where an optical axis of the lens of the camera unit 21 and the solder surface are as close to perpendicular as possible. To this end, in addition to the camera unit 21 described above (referred to as a "main camera"), a sub-camera may be provided to capture an image of the inspection object 12 from a different angle from the main camera, and each of the main camera and sub-camera may be configured to acquire RGB image data according to the angle of the solder portion. For example, the sub-camera can be arranged at a position of the projection unit 24 in Figure 1. When generating HSV-converted RGB image data from image data obtained by the sub-camera, a same relationship as a relationship between a color of the RGB image data obtained by the main camera and an angle of the solder portion is desirably established. In other words, desirably, both the RGB image data obtained by the main camera and the RGB image data obtained by the sub-camera represent a same color when the angle of the solder portion is the same.

In this manner, when RGB image data is to be acquired by the main camera and the sub-camera, an image of solder with no mounted components may be captured by the main camera and an image of good solder at an angle may be captured by the sub-camera.

In the inspection device 10 according to the present embodiment, since a state of soldering and a mounting state of components are to be inspected, the inspection device 10 requires a certain amount of field of view, which leads to decline of the resolution of the camera unit 21. However, as described above, by irradiating the inspection object 12 with illumination light from different angles to acquire pieces of image data, generating RGB image data whose color corresponds to an angle of the solder portion from the pieces of image data, and using the RGB image data to classify a type of solder, the type of solder can be accurately classified even if the resolution of the camera unit 21 is low. In other words, with this classification method of a type of solder, there is no need to capture a shape of a solidification structure in detail and the camera unit 21 need only have a resolution necessary to capture a certain amount of broad-perspective feature characteristics. For example, while capturing a 20 µm-structure generally requires a resolution of 1/10 of the size or, in other words, 2 µm, with the method according to the present application, a resolution of 5 to 30 µm that enables broad-perspective feature characteristics to be captured will suffice. In addition, widening the field of view of the camera unit 21 enables an inspection speed of the inspection object 12 to be increased.

Next, processing of an inspection of a solder portion of the inspection object 12 that is executed by the inspection device 10 according to the present embodiment will be described. While inspections of the inspection object 12 by the inspection device 10 are not limited to an inspection of a solder portion and also include inspecting a good/bad mounting state of electronic components, only an inspection of a solder portion will be described below.

### - First inspection method -

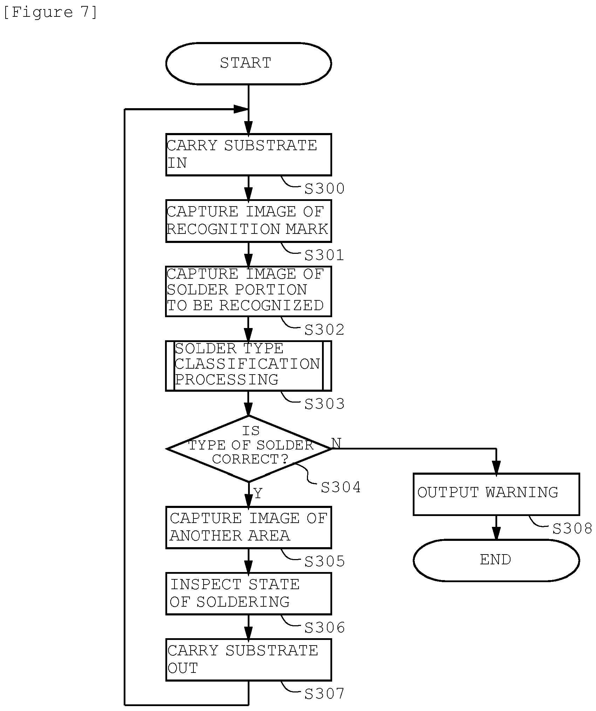

First, a first inspection method of solder will be described using Figure **7****.** When an inspection is started, the controlling unit 30 of the inspection device 10 carries, into an inspection area, the inspection object 12 delivered from an upstream step of the inspection device 10 (step S300). In addition, the controlling unit 30 moves the imaging unit 20 by the XY stage 16 to capture an image of a recognition mark on the inspection object 12 (step S301). The recognition mark enables a position of the substrate to be accurately ascertained and enables a position of solder to be accurately specified in subsequent processing.

Next, the controlling unit 30 moves the imaging unit 20 by the XY stage 16 to capture an image of a solder portion to be used for classification of a type of solder on the inspection object 12 (step S302). As described above, the position of solder can be specified from design data of the inspection object 12 or substrate inspection data and an image of the solder portion can be efficiently acquired based on these pieces of information.

Once image data of the solder portion is acquired in step S302, the controlling unit 30 executes the solder type classification processing described above using the image data and classifies a type of solder used in the inspection object 12 currently being inspected (step S303). The controlling unit 30 compares the type of solder classified in step S303 with a type of solder designated in the design data or the substrate inspection data (step S304). When the controlling unit 30 determines that the type of solder being used is correct (same as the type of solder designated in the design data or the substrate inspection data) (step S304: "Y"), the controlling unit 30 captures an image of another area on the inspection object 12 (step S305), performs an inspection of a state of soldering in each area (step S306), carries out the inspection object 12 to a next step once the inspections of all solder portions have been completed (step S307), and returns to step S300 to perform an inspection of the next inspection object 12.

On the other hand, when the controlling unit 30 determines in step S304 that the type of solder being used is incorrect (differs from the type of solder designated in the design data or the substrate inspection data) (step S304: "N"), the controlling unit 30 outputs a warning using the output unit 37 or the like (step S308) and temporarily ends the inspection processing. When a warning is outputted, a worker or the like extracts the inspection object 12 from the inspection device 10 and checks a type of solder and the like.

As described above, according to the first inspection method, since a type of solder used in the inspection object 12 can be classified from an image of a solder portion and a warning can be issued when the type of solder differs from a type of solder designated in design data or substrate inspection data, the type of solder used in the inspection object 12 can be managed.

### - Second inspection method -

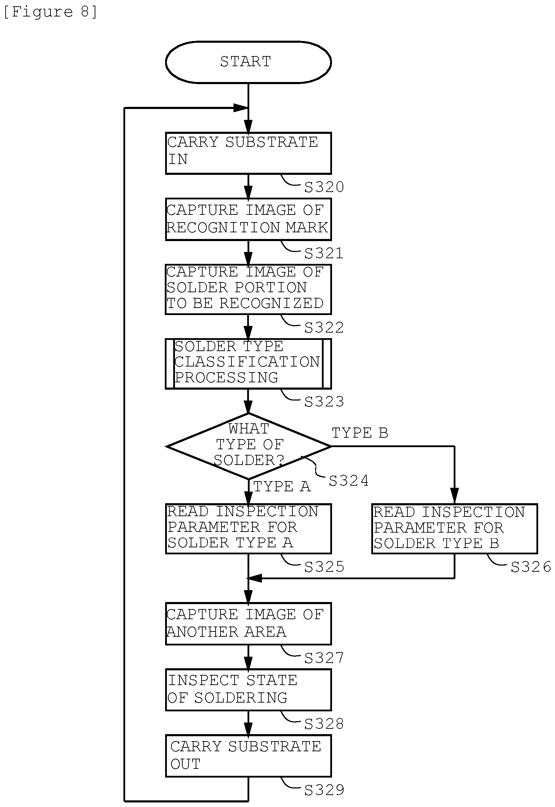

Next, a second inspection method of solder will be described using Figure **8****.** The second inspection method is a method of classifying a type of solder, reading a parameter for inspection having been set according to the type of solder used, switching among pieces of substrate inspection data based on the inspection parameter, and performing an inspection of a soldering state.

When an inspection is started, the controlling unit 30 carries, into an inspection area, the inspection object 12 delivered from an upstream step of the inspection device 10 (step S320). In addition, the controlling unit 30 moves the imaging unit 20 by the XY stage 16 to capture an image of a recognition mark on the inspection object 12 (step S321). The recognition mark enables a position of the substrate to be accurately ascertained and enables a position of solder to be accurately specified in subsequent processing.

Next, the controlling unit 30 moves the imaging unit 20 by the XY stage 16 to capture an image of a solder portion to be used for classification of a type of solder on the inspection object 12 (step S322). In a similar manner to the first inspection method, the position of solder can be specified from design data of the inspection object 12 or substrate inspection data and an image of the solder portion can be efficiently acquired based on these pieces of information.

Once image data of the solder portion is acquired in step S322, the controlling unit 30 executes the solder type classification processing described above using the image data and classifies a type of solder used in the inspection object 12 currently being inspected (step S323). In addition, the controlling unit 30 reads, according to the classified type of solder, an inspection parameter according to the type of solder (step S324). Here, a case where any of two types of solder, A and B, is used will be described in specific terms (the types of solder are not limited to two types). When the controlling unit 30 determines that the type of solder is "A" (step S324: "type A"), the controlling unit 30 reads an inspection parameter for solder type A from the memory 35 or the like (step S325). Alternatively, when the controlling unit 30 determines that the type of solder is "B" (step S324: "type B"), the controlling unit 30 reads an inspection parameter for solder type B from the memory 35 or the like (step S326).

Once the controlling unit 30 reads the inspection parameter, the controlling unit 30 captures an image of another area on the inspection object 12 (step S327), performs an inspection of a state of soldering in each area using the inspection parameter read in step S325 or step S326 described above (step S328), carries out the inspection object 12 to a next step once the inspections of all solder portions have been completed (step S329), and returns to step S320 to perform an inspection of the next inspection object 12.

As described above, according to the second inspection method, since a type of solder used in the inspection object 12 can be classified from an image of a solder portion, an inspection parameter of a soldering state can be read according to the classified type of solder, and switching among pieces of substrate inspection data can be performed using the inspection parameter, an appropriate inspection can be performed according to the type of solder used.

### - Third inspection method -

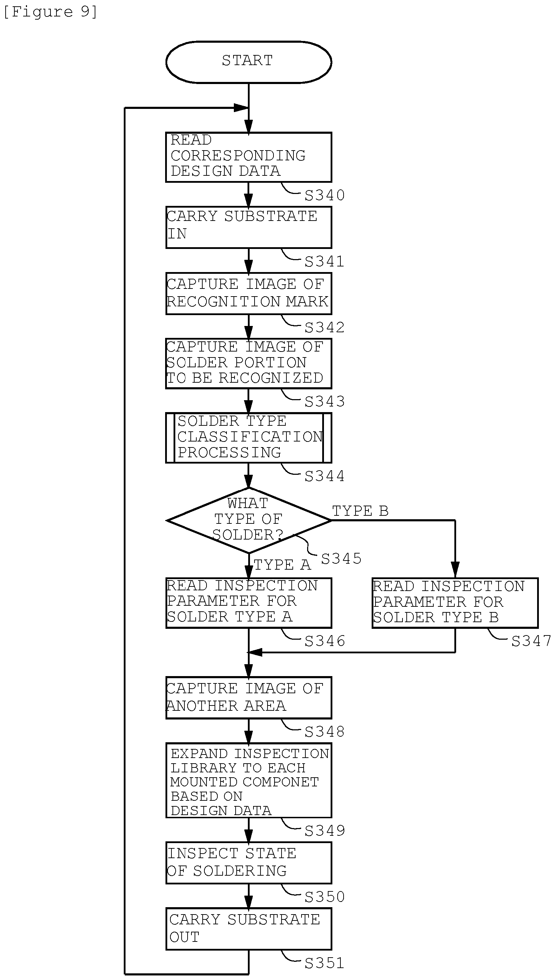

Next, a third inspection method of solder will be described using Figure 9. The third inspection method is a method of classifying a type of solder, generating substrate inspection data according to the type of solder used, and performing an inspection.

When an inspection is started, the controlling unit 30 reads design data of the inspection object 12 to be inspected from the memory 35 (step S340). In addition, the controlling unit 30 carries, into an inspection area, the inspection object 12 delivered from an upstream step of the inspection device 10 (step S341). Furthermore, the controlling unit 30 moves the imaging unit 20 by the XY stage 16 to capture an image of a recognition mark on the inspection object 12 (step S342). The recognition mark enables a position of the substrate to be accurately ascertained and enables a position of solder to be accurately specified in subsequent processing.

Next, the controlling unit 30 moves the imaging unit 20 by the XY stage 16 to capture an image of a solder portion to be used for classification of a type of solder on the inspection object 12 (step S343). In a similar manner to the first and second inspection methods, the position of solder can be specified from design data of the inspection object 12 or substrate inspection data and an image of the solder portion can be efficiently acquired based on these pieces of information.

Once image data of the solder portion is acquired in step S343, the controlling unit 30 executes the solder type classification processing described above using the image data and classifies a type of solder used in the inspection object 12 currently being inspected (step S344). In addition, the controlling unit 30 reads, according to the classified type of solder, an inspection library according to the type of solder (step S345). Here, a case where any of two types of solder, A and B, is used will be described in specific terms (the types of solder are not limited to two types). When the controlling unit 30 determines that the type of solder is "A" (step S345: "type A"), the controlling unit 30 reads an inspection library for solder type A from the memory 35 or the like (step S346). Alternatively, when the controlling unit 30 determines that the type of solder is "B" (step S345: "type B"), the controlling unit 30 reads an inspection library for solder type B from the memory 35 or the like (step S347).

Once the controlling unit 30 reads the inspection library, the controlling unit 30 captures an image of another area on the inspection object 12 (step S348), and using the design data read in step S340 and the inspection library read in step S346 or step S347 described above, applies the inspection library to each mounted component based on the design data (step S349). In addition, the controlling unit 30 performs an inspection of a state of soldering in each area using the applied inspection library (step S350), carries out the inspection object 12 to a next step once the inspections of all solder portions have been completed (step S351), and returns to step S340 to perform an inspection of the next inspection object 12.

As described above, according to the third inspection method, a type of solder used in the inspection object 12 can be classified from an image of a solder portion, an inspection library can be applied according to the classified type of solder, and an inspection of a soldering state or a good/bad mounting state of electronic components can be performed based on the inspection library. Therefore, since inspection data can be generated according to the type of solder used in the inspection object 12, an appropriate inspection can be performed according to the type of solder used.

### - Fourth inspection method -

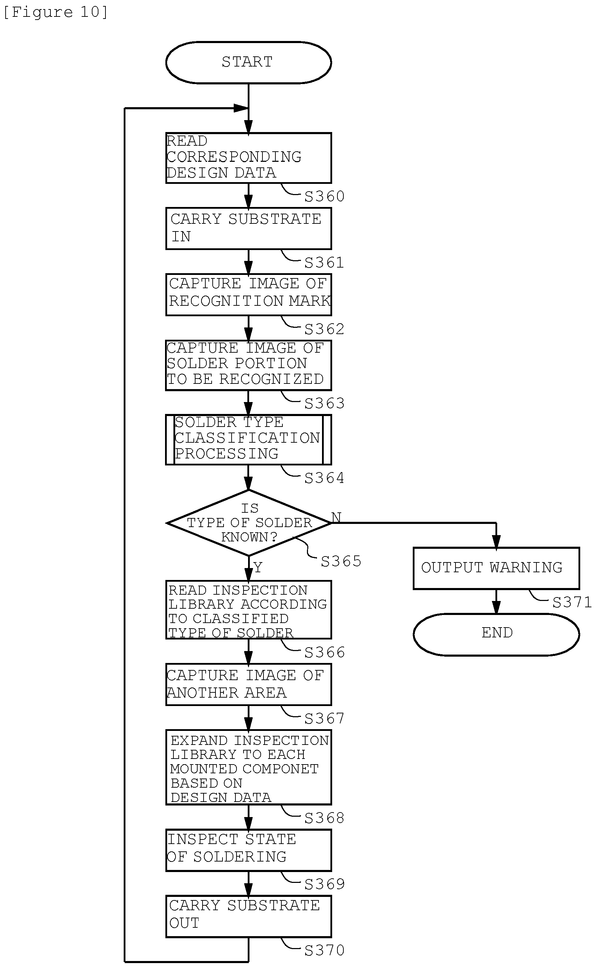

Next, a fourth inspection method of solder will be described using Figure 10. While an inspection library is applied according to the type of solder used in the third inspection method, the fourth inspection method is a case of a configuration of aborting, in combination with the first inspection method, inspection processing when a type of solder is classified as a type that is not intended to be used.

When an inspection is started, the controlling unit 30 reads design data of the inspection object 12 to be inspected from the memory 35 (step S360). In addition, the controlling unit 30 carries, into an inspection area, the inspection object 12 delivered from an upstream step of the inspection device 10 (step S361). Furthermore, the controlling unit 30 moves the imaging unit 20 by the XY stage 16 to capture an image of a recognition mark on the inspection object 12 (step S362). The recognition mark enables a position of the substrate to be accurately ascertained and enables a position of solder to be accurately specified in subsequent processing.

Next, the controlling unit 30 moves the imaging unit 20 by the XY stage 16 to capture an image of a solder portion to be used for classification of a type of solder on the inspection object 12 (step S363). As described in the first inspection method, the position of solder can be specified from design data of the inspection object 12 or substrate inspection data and an image of the solder portion can be efficiently acquired based on these pieces of information.

Once image data of the solder portion is acquired in step S363, the controlling unit 30 executes the solder type classification processing described above using the image data and classifies a type of solder used in the inspection object 12 currently being inspected (step S364). In addition, the controlling unit 30 determines whether or not the type of solder classified in step S364 is a known type of solder (a type of solder that may be set in design data or substrate inspection data) (step S365). Specifically, when the controlling unit 30 determines that the type of solder used is known (step S365: "Y"), the controlling unit 30 reads an inspection library according to the classified type of solder from the memory 35 (step S366), captures an image of another area on the inspection object 12 (step S367), and using the design data read in step S360 and the inspection library read in step S366 described above, applies the inspection library to each mounted component based on the design data (step S368). In addition, the controlling unit 30 performs an inspection of a state of soldering in each area based on the applied inspection library (step S369), carries out the inspection object 12 to a next step once the inspections of all solder portions have been completed (step S370), and returns to step S360 to perform an inspection of the next inspection object 12.

On the other hand, when the controlling unit 30 determines in step S365 that the type of solder being used is not known (step S365: "N"), the controlling unit 30 outputs a warning using the output unit 37 or the like (step S371) and temporarily ends the inspection processing. When a warning is outputted, a worker or the like extracts the inspection object 12 from the inspection device 10 and checks a type of solder and the like.

As described above, according to the fourth inspection method, since a type of solder used in the inspection object 12 can be classified from an image of a solder portion and a warning can be issued when the classified type of solder is not a known type of solder, the type of solder used in the inspection object 12 can be managed. In addition, since an inspection library can be set according to the type of solder, an appropriate inspection can be performed according to the type of solder used.

### - Fifth inspection method -

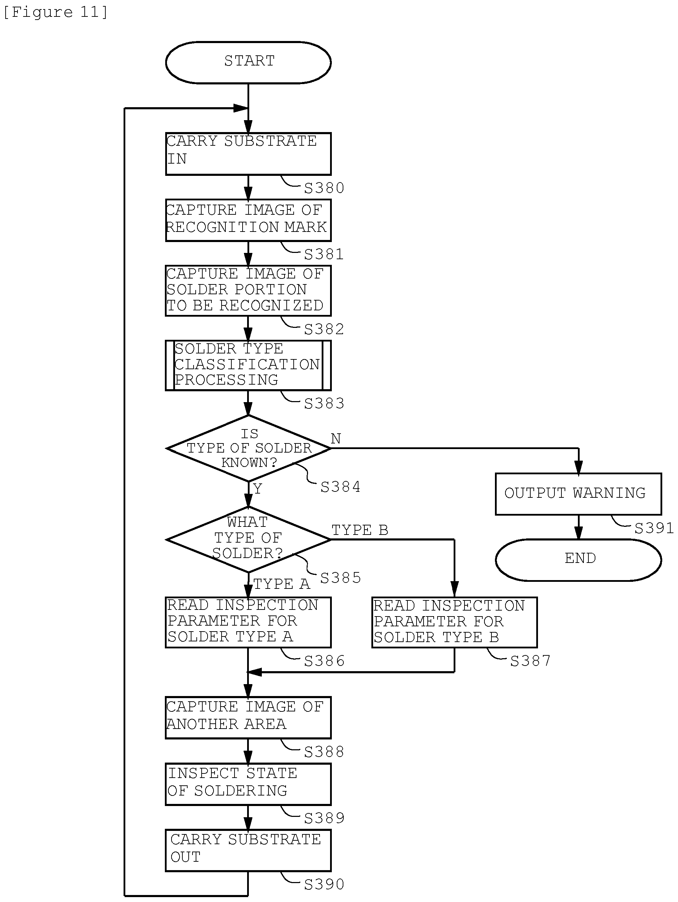

Finally, a fifth inspection method of solder will be described using Figure 11. While a parameter for inspection is read according to the type of solder used and an inspection of a state of soldering is performed by switching among pieces of substrate data based on the parameter in the second inspection method, the fifth inspection method is a case of a configuration of aborting, in combination with the first inspection method, inspection processing when a type of solder is classified as a type that is not intended to be used.

When an inspection is started, the controlling unit 30 carries, into an inspection area, the inspection object 12 delivered from an upstream step of the inspection device 10 (step S380). Furthermore, the controlling unit 30 moves the imaging unit 20 by the XY stage 16 to capture an image of a recognition mark on the inspection object 12 (step S381). The recognition mark enables a position of the substrate to be accurately ascertained and enables a position of solder to be accurately specified in subsequent processing.

Next, the controlling unit 30 moves the imaging unit 20 by the XY stage 16 to capture an image of a solder portion to be used for classification of a type of solder on the inspection object 12 (step S382). In a similar manner to the first inspection method, the position of solder can be specified from design data of the inspection object 12 or substrate inspection data and an image of the solder portion can be efficiently acquired based on these pieces of information.

Once image data of the solder portion is acquired in step S382, the controlling unit 30 executes the solder type classification processing described above using the image data and classifies a type of solder used in the inspection object 12 currently being inspected (step S383). When the type of solder is classified, the controlling unit 30 determines whether or not the type of solder classified in step S383 is a known type of solder (a type of solder that may be set in design data or substrate inspection data) (step S384). Specifically, when the controlling unit 30 determines that the type of solder used is known (step S384: Y"), the controlling unit 30 reads, according to the classified type of solder, an inspection parameter according to the classified type of solder (step S385). Here, a case where any of two types of solder, A and B, is used will be described in specific terms (the types of solder are not limited to two types). When the controlling unit 30 determines that the type of solder is "A" (step S385: "type A"), the controlling unit 30 reads an inspection parameter for solder type A from the memory 35 or the like (step S386). Alternatively, when the controlling unit 30 determines that the type of solder is "B" (step S385: "type B"), the controlling unit 30 reads an inspection parameter for solder type B from the memory 35 or the like (step S387).

Once the controlling unit 30 reads the inspection parameter, the controlling unit 30 captures an image of another area on the inspection object 12 (step S388), performs an inspection of a state of soldering in each area using the inspection parameter read in step S386 or step S387 described above (step S389), carries out the inspection object 12 to a next step once the inspections of all solder portions have been completed (step S390), and returns to step S380 to perform an inspection of the next inspection object 12.

On the other hand, when the controlling unit 30 determines in step S384 that the type of solder being used is not known (step S384: "N"), the controlling unit 30 outputs a warning using the output unit 37 or the like (step S391) and temporarily ends the inspection processing. When a warning is outputted, a worker or the like extracts the inspection object 12 from the inspection device 10 and checks a type of solder and the like.

As described above, according to the fifth inspection method, since a type of solder used in the inspection object 12 can be classified from an image of a solder portion and a warning can be issued when the classified type of solder is not a known type of solder, the type of solder used in the inspection object 12 can be managed. In addition, since an inspection parameter of a soldering state can be read according to the classified type of solder and switching among pieces of substrate inspection data can be performed using the inspection parameter, an appropriate inspection can be performed according to the type of solder used.

### Reference Signs List

- 10: inspection device
- 12: inspection object
- 20: imaging unit (image unit)
- 21: camera unit
- 23: illuminating unit (light source)
- 30: controlling unit (control unit)

## Claims

1. An inspection device, comprising:
an image unit that captures an image of an inspection object; and
a control unit, wherein
the control unit
captures an image of a solder portion on the inspection object with the image unit and acquires image data,
extracts a feature of a shape of a solidification structure that appears on a surface of the solder portion from the image data, and
classifies solder used in the solder portion based on the feature.

2. The inspection device according to claim 1, comprising:
a light source that irradiates the inspection object with illumination light, wherein
the control unit
acquires image data of the solder portion,
generates, from the image data, RGB image data in which an angle of the solder portion and color information are associated with each other, and
classifies solder used in the solder portion based on the RGB image data.

3. The inspection device according to claim 2, comprising:
a plurality of light sources that emit the illumination light from different angles.

4. The inspection device according to claim 3, wherein
the color information corresponds to a hue in an HSV color system.

5. The inspection device according to any one of claims 1 to 4, wherein
the control unit
specifies a position on the inspection object of a solder portion of which image data to be used for classifying solder is to be acquired based on design data or inspection data of the inspection object.

6. The inspection device according to any one of claims 1 to 4, wherein
the control unit
inspects the inspection object based on classified solder.

7. The inspection device according to any one of claims 1 to 4, wherein
the control unit
selects inspection data according to classified solder and inspects the inspection object based on the selected inspection data.

8. The inspection device according to any one of claims 1 to 4, wherein
the control unit
generates inspection data according to classified solder and inspects the inspection object based on the generated inspection data.

9. The inspection device according to any one of claims 1 to 4, wherein
the feature is a size or the number of irregularities on a surface of the solder portion.

10. The inspection device according to any one of claims 1 to 4, wherein
the control unit
classifies solder based on an AI model generated by machine learning from the feature and the solder.

11. The inspection device according to any one of claims 1 to 4, wherein
the image unit includes a plurality of camera units with different imaging angles with respect to the inspection object, and
the control unit
classifies the solder using each piece of image data of the inspection object captured by the plurality of camera units.

12. The inspection device according to any one of claims 1 to 4, wherein
the control unit
acquires image data of a plurality of solder portions and, according to each piece of image data, classifies solder of a solder portion corresponding to the image data, and
classifies solder that is classified most frequently in the classified solder as the solder being used in the inspection object.

13. The inspection device according to any one of claims 1 to 4, wherein
the control unit
performs, in addition to classification of the solder,
an inspection of a soldering state of a solder portion on the inspection object.

14. The inspection device according to any one of claims 1 to 4, wherein
the control unit
stops inspection according to the classified solder.
